# DEMANDE DE BREVET EUROPEEN

(11) **EP 4 644 945 A2**
(43) Date de publication de la demande: **05.11.2025**
(21) Numéro de dépôt: 25171864.9
(22) Date de dépôt: 23.04.2025
(51) Int. Cl.: G01S 7/03, G01S 7/285, G01S 13/10, G01S 13/02

(54) **RADAR A COURTE PORTEE ET PROCEDE DE FONCTIONNEMENT D'UN RADAR**

(30) Priorité: 29.04.2024 FR 2404470
(71) Demandeur: STMicroelectronics International N.V., 1228 Plan-les-Ouates, Geneva (CH)
(72) Inventeur: VOINEAU, Florian, 38000 GRENOBLE (FR)
(74) Mandataire: Cabinet Beaumont

(57) **Abrégé**

La présente description concerne un radar (50) comprenant un récepteur (30) d'ondes électromagnétiques comprenant une antenne de réception (32) des ondes électromagnétiques reliée à un circuit intégré comprenant un amplificateur différentiel à faible bruit (35) et un circuit d'atténuation (ATT) interposé entre l'antenne de réception (32) et l'amplificateur différentiel à faible bruit (35), le circuit d'atténuation (ATT) comprenant au moins des premier, deuxième, troisième, et quatrième transistors.

## Description

### Domaine technique

La présente description concerne de façon générale les radars à courte portée, notamment les radars à ultra large bande, et les procédés de fonctionnement des radars à courte portée

### Technique antérieure

Le radar (acronyme issu de l'anglais radio detection and ranging) est un appareil de télédétection qui utilise les ondes électromagnétiques pour détecter la présence et déterminer la position ainsi que la vitesse d'objets, également appelés cibles. Les ondes envoyées par l'émetteur sont réfléchies par la cible, et les signaux de retour (appelés écho radar ou écho-radar) sont captés et analysés par le récepteur. La distance est obtenue grâce au temps aller/retour du signal.

Un radar pulsé est un radar qui émet des impulsions d'ondes électromagnétiques puis se met en mode écoute de l'écho renvoyé par la cible. Le radar pulsé peut être un radar à ultra large bande, ou radar UWB (sigle anglais pour Ultra wideband) lorsque le signal émis comporte un très large spectre de fréquences, par exemple selon la norme IEEE 802.15.4.

Le radar est dit à courte portée lorsqu'il est capable de détecter une cible proche du récepteur. Ceci implique que le récepteur du radar doit être capable de détecter un écho reçu peu de temps après la fin de l'émission d'une impulsion. Toutefois, des phénomènes de couplage entre l'émetteur et le récepteur peuvent rendre difficile cette détection.

### Résumé de l'invention

Un mode de réalisation pallie tout ou partie des inconvénients des radars à courte portée connus.

Un mode de réalisation prévoit un radar comprenant un récepteur d'ondes électromagnétiques comprenant une antenne de réception des ondes électromagnétiques reliée à un circuit intégré comprenant un amplificateur différentiel à faible bruit et un circuit d'atténuation interposé entre l'antenne de réception et l'amplificateur différentiel à faible bruit, le circuit d'atténuation comprenant au moins des premier, deuxième, troisième, et quatrième transistors.

Selon un mode de réalisation, les premier, deuxième, troisième, et quatrième transistors sont des transistors à effet de champ à grille isolée.

Selon un mode de réalisation, le radar comprend une première ligne symétrique entre l'antenne de réception et le circuit d'atténuation et une deuxième ligne symétrique entre le circuit d'atténuation et l'amplificateur différentiel à faible bruit.

Selon un mode de réalisation, le circuit d'atténuation comprend :
- un premier noeud connecté à une première piste conductrice de la première ligne symétrique ;
- un deuxième noeud connecté à une deuxième piste conductrice de la première ligne symétrique ;
- un troisième noeud connecté à une première piste conductrice de la deuxième ligne symétrique ;
- un quatrième noeud connecté à une deuxième piste conductrice de la deuxième ligne symétrique ;
- le premier transistor, dont l'un du drain et de la source est relié au premier noeud et dont l'autre du drain et de la source est relié au troisième noeud, et dont la grille reçoit un premier signal binaire ;
- le deuxième transistor, dont l'un du drain et de la source est relié au premier noeud et dont l'autre du drain et de la source est relié au quatrième noeud, et dont la grille reçoit un deuxième signal binaire ;
- le troisième transistor, dont l'un du drain et de la source est relié au deuxième noeud et dont l'autre du drain et de la source est relié au troisième noeud, et dont la grille reçoit le deuxième signal binaire ; et
- le quatrième transistor, dont l'un du drain et de la source est relié au deuxième noeud et dont l'autre du drain et de la source est relié au troisième noeud, et dont la grille reçoit le premier signal binaire.

Selon un mode de réalisation, le radar comprend en outre un balun interposé entre l'antenne de réception et le circuit d'atténuation et connecté à la première ligne symétrique.

Selon un mode de réalisation, le radar comprend en outre un émetteur des ondes électromagnétiques comprenant une antenne d'émission des ondes électromagnétiques, confondue ou distincte de l'antenne de réception, et reliée à un circuit de commande configuré pour commander l'antenne d'émission, le circuit de commande étant en outre configuré pour commander le circuit d'atténuation.

Selon un mode de réalisation, dans un premier mode de fonctionnement, le circuit de commande est configuré pour commander la mise à l'état passant des premier et quatrième transistors et la mise à l'état bloqué des deuxième et troisième transistors, et, dans un deuxième mode de fonctionnement, le circuit de commande est configuré pour commander la mise à l'état passant des premier, deuxième, troisième, et quatrième transistors.

Selon un mode de réalisation, chacun des premier, deuxième troisième, et quatrième transistors comprend N transistors MOS en parallèle, où N est un nombre entier supérieur ou égal à 2.

Un mode de réalisation prévoit également un procédé de fonctionnement du radar tel que défini précédemment, comprenant, dans un premier mode de fonctionnement, la mise à l'état passant des premier et quatrième transistors et la mise à l'état bloqué des deuxième et troisième transistors, et, dans un deuxième mode de fonctionnement, la mise à l'état passant des premier, deuxième, troisième, et quatrième transistors.

Selon un mode de réalisation, le procédé comprend le passage du premier mode de fonctionnement au deuxième mode de fonctionnement, et le maintien du deuxième mode de fonctionnement pendant une durée déterminée, à la commande par le circuit de commande, de l'émission d'une impulsion des ondes électromagnétiques, et le passage du deuxième mode de fonctionnement au premier mode de fonctionnement à l'achèvement de la durée déterminée.

Selon un mode de réalisation, le procédé comprend, dans le premier mode de fonctionnement, la mise à l'état passant des N transistors MOS des premier et quatrième transistors et la mise à l'état bloqué des N transistors MOS des deuxième et troisième transistors, dans le deuxième mode de fonctionnement, la mise à l'état passant des N transistors MOS des premier, deuxième, troisième, et quatrième transistors, et comprend, dans un troisième mode de fonctionnement, la mise à l'état passant des N transistors MOS des premier et quatrième transistors, la mise à l'état passant d'une partie des N transistors MOS des deuxième et troisième transistors et la mise à l'état bloqué du reste des N transistors MOS des deuxième et troisième transistors.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple d'un radar ;
la figure 2 est un chronogramme de signaux utilisés par le radar de la figure 1 ;
la figure 3 est un schéma électrique d'un exemple d'un radar mettant en oeuvre un procédé de réduction de couplage ;
la figure 4 est un schéma électrique d'un autre exemple d'un radar mettant en oeuvre un procédé de réduction de couplage ;
la figure 5 est un schéma électrique d'un mode de réalisation d'un radar ;
la figure 6 est un schéma électrique d'un mode de réalisation d'un circuit d'atténuation du radar de la figure 5 ;
la figure 7 est un schéma électrique du circuit d'atténuation de la figure 6 illustrant les chemins de circulation de courant dans un premier mode de fonctionnement ;
la figure 8 est un schéma électrique du circuit d'atténuation de la figure 6 illustrant les chemins de circulation de courant dans un deuxième mode de fonctionnement ;
la figure 9 représente des chronogrammes de signaux utilisés par le radar de la figure 5 ;
la figure 10 illustre l'évolution du gain maximal de transmission du circuit d'atténuation de la figure 6 en fonction de la fréquence du signal reçu dans le premier mode de fonctionnement et dans le deuxième mode de fonctionnement ;
la figure 11 est une courbe d'évolution, en fonction de la fréquence du signal reçu, de la différence entre le gain maximal de transmission du circuit d'atténuation de la figure 6 dans le premier mode de fonctionnement et dans le deuxième mode de fonctionnement ;
la figure 12 est un agrandissement de la figure 10 et la figure 13 est un agrandissement de la figure 11 ;
La figure 14 est un chronogramme d'un exemple de signal d'entrée du circuit d'atténuation de la figure 6 et la figure 15 est une courbe d'évolution du signal de sortie obtenu ;
la figure 16 est une courbe d'évolution du gain du circuit d'atténuation de la figure 6 en fonction de la puissance du signal reçu ;
la figure 17 est un schéma électrique d'un autre mode de réalisation du circuit d'atténuation du radar de la figure 5 ; et
la figure 18 représente des chronogrammes de signaux utilisés pour la commande du circuit d'atténuation de la figure 17.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les procédés d'émission d'ondes électromagnétiques par un radar pulsé sont bien connus de l'homme du métier et ne sont pas décrits en détail.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un ... dans une position normale d'utilisation.

Sauf précision contraire, les expressions "environ", "approximativement", "sensiblement", et "de l'ordre de" signifient à 10 % ou à 10° près, de préférence à 5 % ou à 5° près. De plus, on appelle "signal binaire" un signal qui alterne entre un premier état constant, par exemple un état bas, noté "0", et un deuxième état constant, par exemple un état haut, noté "1". Les états haut et bas de signaux binaires différents d'un même circuit électronique peuvent être différents. En pratique, les signaux binaires peuvent correspondre à des tensions ou à des courants qui peuvent ne pas être parfaitement constants à l'état haut ou bas.

On appelle transistor MOS un transistor à effet de champ à grille isolée ou MOSFET (acronyme anglais de Metal-Oxide-Semiconductor Field-Effect Transistor). On appelle radar UWB un radar pulsé pour lequel le spectre de fréquences de l'impulsion émise présente une fréquence centrale comprise entre 6,5 GHz et 9,5 GHz, et une bande-passante est comprise entre 500 MHz et 1,35 GHz. A titre d'exemple, un système UWB suit la norme IEEE 802.15.4

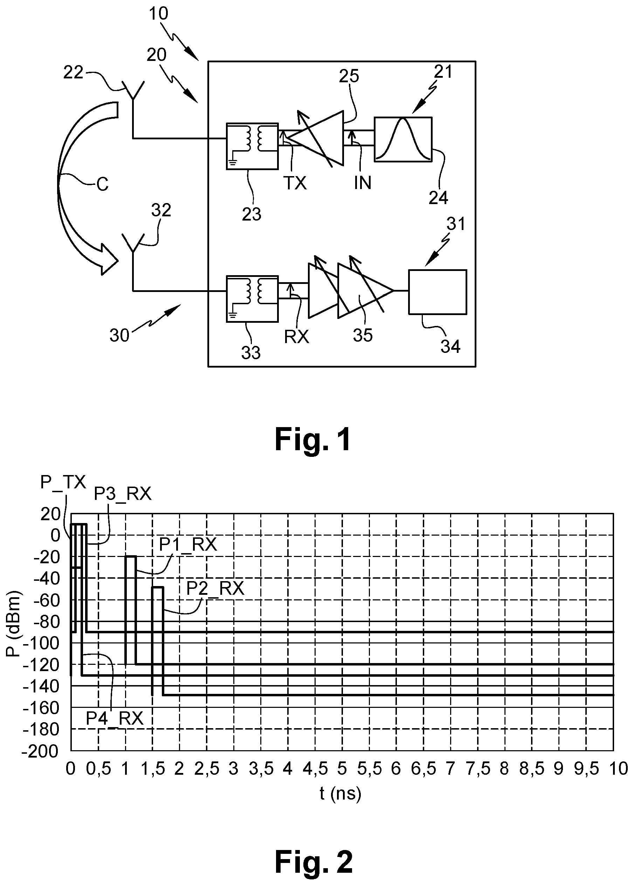

La figure 1 représente, de façon partielle et schématique, un exemple d'un radar pulsé 10, par exemple un radar UWB.

Le radar 10 comprend un émetteur 20 d'ondes électromagnétiques et un récepteur 30 d'ondes électromagnétiques. L'émetteur 20 comprend un circuit électronique d'émission 21 à sorties symétriques relié à une antenne d'émission 22 d'ondes électromagnétiques par l'intermédiaire d'un balun 23. Le balun 23 est un circuit électrique utilisé pour effectuer la liaison entre une ligne de transmission symétrique provenant du circuit d'émission 21 et une ligne de transmission asymétrique reliée à l'antenne d'émission 22. Le récepteur 30 comprend un circuit électronique de réception 31 à entrées symétriques relié à une antenne de réception 32 par l'intermédiaire d'un balun 33. Le balun 33 est un circuit électrique utilisé pour effectuer la liaison entre une ligne de transmission asymétrique reliée à l'antenne de réception 32 et une ligne de transmission symétrique provenant du circuit de réception 31. Chaque balun 23, 33 peut comprendre un transformateur à deux enroulements. Dans l'exemple représenté en figure 1, l'antenne d'émission 22 et l'antenne de réception 32 sont distinctes. A titre de variante, l'antenne d'émission 22 et l'antenne de réception 32 peuvent être confondues.

Le circuit électronique d'émission 21 comprend un générateur d'impulsion 24 fournissant un signal IN à un amplificateur de puissance 25 qui amplifie le signal IN et fournit un signal analogique TX au balun 23. Le balun 23 transforme le signal analogique différentiel TX en un signal asymétrique qui est émis par l'antenne d'émission 22 sous forme d'ondes électromagnétiques. Le circuit électronique de réception 31 comprend un circuit de traitement 34 des signaux fournis par un amplificateur faible bruit 35. L'antenne de réception 32 est dimensionnée pour capter des ondes électromagnétiques et fournir un signal analogique au balun 33 qui transforme ce signal analogique en un signal différentiel analogique RX transmis à l'amplificateur faible bruit 35.

Pour un radar pulsé, le circuit électronique d'émission 21 met en forme les signaux fournis à l'antenne d'émission 22 pour l'émission d'une impulsion d'ondes électromagnétiques de durée donnée, par exemple inférieure à 1 ns, de préférence inférieure à 0,5 ns. L'impulsion d'ondes électromagnétiques se réfléchit sur un objet présent dans le champ d'émission, et les ondes électromagnétiques réfléchies, également appelées écho, sont captées par l'antenne de réception 32. Le circuit de traitement 34 est alors adapté à déterminer la distance qui sépare le radar 10 de l'objet en fonction de la durée entre l'émission de l'impulsion d'ondes électromagnétiques et la réception de l'écho.

Le radar 10 est généralement conçu pour pouvoir détecter un objet situé entre une distance minimale et une distance maximale. Pour un radar à courte portée, la distance minimale est faible, par exemple inférieure à 50 cm, de sorte qu'un premier écho peut atteindre l'antenne de réception 32 peu après l'émission de l'impulsion radar par l'antenne d'émission 22. Ce premier écho peut conduire à un signal RX ayant une amplitude élevée que le circuit de réception 31 doit pouvoir traiter.

Des phénomènes de couplage peuvent se produire entre l'émetteur 20 et le récepteur 30, ce qui est représenté schématiquement par une flèche C en figure 1.

La figure 2 représente des courbes d'évolution de la puissance électrique moyenne P du signal TX (courbe P_TX) et du signal RX (courbes P1_RX, P2_RX, P3_RX, et P4_RX) en fonction du temps illustrant des phénomènes de couplage. Chaque courbe P_TX, _RX, P2_RX, P3_RX, et P4_RX comprend une impulsion qui est schématiquement représenté par un créneau en figure 2. En figure 2, les signaux P1_RX, P2_RX, P3_RX, et P4_RX sont sensiblement constants en l'absence de réception d'écho à des niveaux différents non nuls bien que très faibles et représentent le signal émis involontairement par le radar en l'absence d'impulsion à transmettre.

Les impulsions des courbes P1_RX et P2_RX correspondent à des échos reçus par le radar 10 pour des objets situés à des distances différentes du radar 10 ou des échos provenant d'un même objet mais ayant suivi des chemins de propagation différents. L'impulsion du signal P1_RX est obtenue pour un objet proche du radar 10 dans la mesure où la durée de 1 ns entre le début de l'impulsion de la courbe P_TX et le début de réception l'impulsion de la courbe P1_RX correspond à un objet distant de 15 cm en ligne directe du radar 10.

La courbe P4_RX illustre un premier type de couplage du radar 10 qui correspond à un couplage entre le circuit d'émission 21 et le circuit de réception 31 lorsque ceux-ci sont formés sur un même circuit intégré, d'où il résulte que la fourniture d'une impulsion du signal TX se traduit par la formation quasi-simultanée d'une impulsion du signal RX. La courbe P3_RX illustre un deuxième type de couplage du radar 10 qui correspond à un couplage entre l'antenne d'émission 22 et l'antenne de réception 32 qui sont généralement proches l'une de l'autre, voire confondues, d'où il résulte que la fourniture d'une impulsion du signal TX se traduit également par la formation quasi-simultanée d'une impulsion du signal RX. Comme cela apparaît en figure 2, la puissance électrique des impulsions de couplage peut être élevée, notamment supérieure à 16 dBm, et en particulier supérieure à la puissance électrique d'une impulsion correspondant à un écho sur un objet proche du radar.

Il faut alors que l'amplificateur à faible bruit 35 puisse recevoir les impulsions dues aux phénomènes de couplage sans être détérioré, ce qui peut entraîner un surdimensionnement de l'amplificateur à faible bruit 35 par rapport aux niveaux de puissance qu'il reçoit dans le cas de véritables échos. Il est souhaitable de protéger l'amplificateur à faible bruit 35 contre les impulsions dues aux phénomènes de couplage.

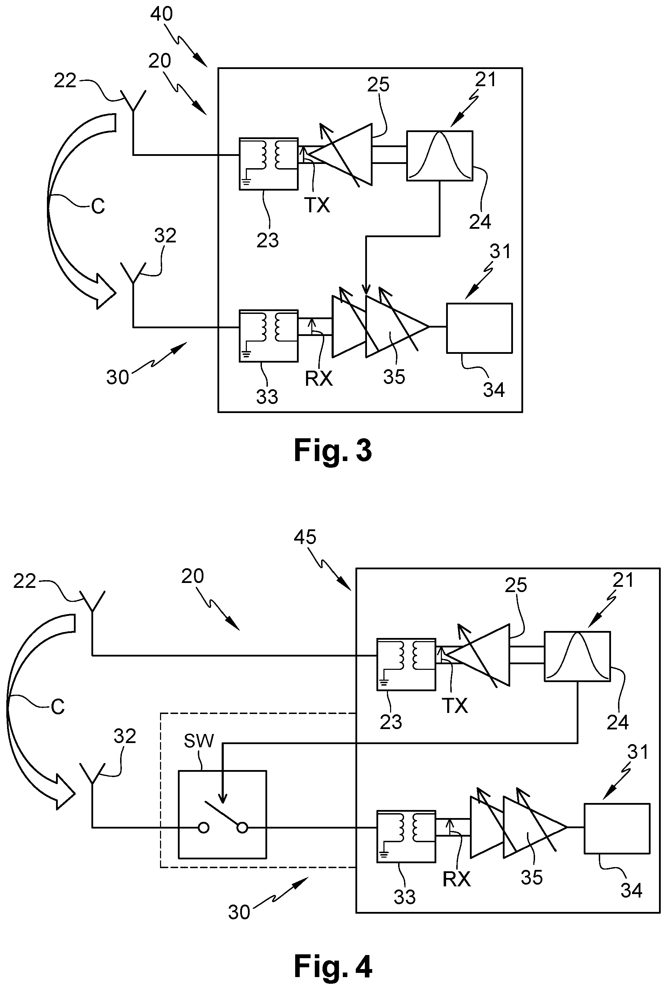

La figure 3 est un schéma électrique d'un exemple d'un radar 40 mettant en oeuvre un procédé de réduction des phénomènes de couplage. Le radar 40 représenté en figure 3 comprend l'ensemble des éléments du radar 10 représenté en figure 1, le générateur d'impulsion 24 étant en outre adapté pour commander la désactivation temporaire de l'amplificateur à faible bruit 35, notamment en stoppant temporairement l'alimentation de l'amplificateur à faible bruit 35. En particulier, le générateur d'impulsion 24 commande la désactivation de l'amplificateur à faible bruit 35 pendant une durée déterminée à partir de l'émission d'une impulsion pour que l'amplificateur à faible bruit 35 ne transmette pas au circuit de traitement 34 les impulsions amplifiées du signal RX qui sont dues aux phénomènes de couplage. Il faut que l'amplificateur à faible bruit 35 soit réactivé avant la réception du premier écho par l'antenne de réception 32. Il peut généralement être obtenu une atténuation d'environ 10 dB par l'amplificateur à faible bruit 35 en 1 ns. Un inconvénient est qu'une telle atténuation peut ne pas être suffisante pour bloquer des impulsions dues aux phénomènes de couplage.

La figure 4 est un schéma électrique d'un exemple d'un radar 45 mettant en oeuvre un autre procédé de réduction phénomènes de couplage. Le radar 45 représenté en figure 4 comprend l'ensemble des éléments du radar 10 représenté en figure 1, et comprend, en outre, un interrupteur SW entre l'antenne de réception 32 et le balun 33. Le générateur d'impulsion 24 est configuré pour commander l'ouverture et la fermeture de l'interrupteur SW. En particulier, le générateur d'impulsion 24 commande l'ouverture de l'interrupteur SW pendant une durée déterminée à partir de l'émission d'une impulsion du signal IN pour que l'amplificateur à faible bruit 35 ne reçoive pas les impulsions du signal RX qui sont dues aux phénomènes de couplage. Il faut que l'interrupteur SW soit fermé avant la réception du premier écho par l'antenne de réception 32. Un inconvénient est que l'interrupteur SW correspond à un composant électronique ou un circuit électronique supplémentaire en plus du circuit de réception 21. Il peut être difficile d'obtenir une synchronisation convenable entre les impulsions fournies par le générateur d'impulsion 24 et les phases d'ouverture et de fermeture de l'interrupteur SW.

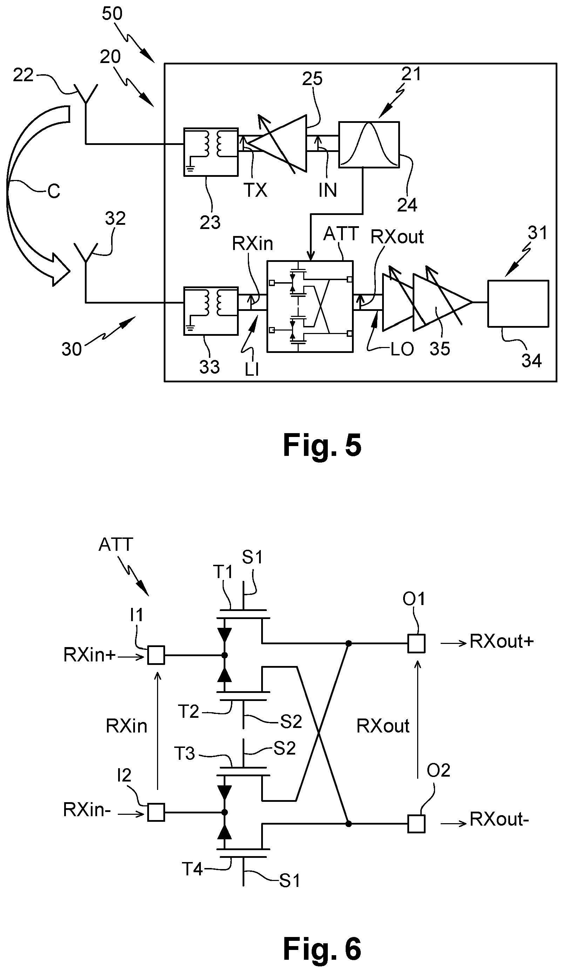

La figure 5 est un schéma électrique d'un mode de réalisation d'un radar 50 mettant en oeuvre un procédé de réduction des phénomènes de couplage.

Le radar 50 représenté en figure 5 comprend l'ensemble des éléments du radar 10 représenté en figure 1, le circuit de réception 31 comprenant, en outre, un circuit d'atténuation ATT reliant le balun 33 à l'amplificateur à faible bruit 35. Le balun 33 fournit un signal RXin au circuit d'atténuation ATT et le circuit d'atténuation ATT fournit un signal RXout au circuit de réception 31. Selon un mode de réalisation, le circuit d'atténuation ATT et l'amplificateur à faible bruit 35 correspondent à un circuit intégré.

Selon un mode de réalisation, le circuit de réception 31 est un circuit différentiel. Autrement dit, le circuit de réception 31 a une structure symétrique. Ceci signifie que les signaux RXin et RXout sont transmis par des lignes symétriques. Une ligne symétrique est un groupe de deux pistes conductrices ayant exactement la même relation à la masse, acheminant un signal électrique, d'une source vers une charge. Le signal étant la différence de potentiel entre les deux pistes conductrices, on parle de signalisation différentielle. Le signal RXin correspond à une tension entre les deux pistes conductrices d'une ligne symétrique LI entre le balun 33 et le circuit d'atténuation ATT et le signal RXout correspond à une tension entre les deux pistes conductrices d'une ligne symétrique LO entre le circuit d'atténuation ATT et l'amplificateur à faible bruit 35.

La figure 6 est un schéma électrique d'un mode de réalisation du circuit d'atténuation ATT.

Le circuit d'atténuation ATT comprend :
- un premier noeud d'entrée I1, ayant un potentiel RXin+, et destiné à être connecté à la première piste conductrice, non représentée, de la ligne symétrique LI reliant le circuit d'atténuation ATT au balun 33 ;
- un deuxième noeud d'entrée I2, ayant un potentiel RXin-, et destiné à être connecté à la deuxième piste conductrice, non représentée, de la ligne symétrique LI reliant le circuit d'atténuation ATT au balun 33 ;
- un premier noeud de sortie O1, ayant un potentiel RXout+, destiné à être connecté à la première piste conductrice, non représentée, de la ligne symétrique LO reliant le circuit d'atténuation ATT à l'amplificateur à faible bruit 35 ;
- un deuxième noeud de sortie O2, ayant un potentiel RXout-, destiné à être connecté à la deuxième piste conductrice, non représentée, de la ligne symétrique LO reliant le circuit d'atténuation ATT à l'amplificateur à faible bruit 35 ;
- un premier transistor MOS T1, par exemple à canal N, dont le drain est relié, de préférence connecté au noeud O1, dont la source est reliée, de préférence connectée, au noeud I1, et dont la grille reçoit un signal binaire S1 ;
- un deuxième transistor MOS T2, par exemple à canal N, dont le drain est relié, de préférence connecté au noeud O2, dont la source est reliée, de préférence connectée, au noeud I1, et dont la grille reçoit un signal binaire S2 ;
- un troisième transistor MOS T3, par exemple à canal N, dont le drain est relié, de préférence connecté au noeud O1, dont la source est reliée, de préférence connectée, au noeud I2, et dont la grille reçoit le signal binaire S2 ; et
- un quatrième transistor MOS T4, par exemple à canal N, dont le drain est relié, de préférence connecté au noeud O2, dont la source est reliée, de préférence connectée, au noeud I2, et dont la grille reçoit le signal binaire S1.

Le signal RXin correspond à la tension entre les noeuds I1 et I2 et le signal RXout correspond à la tension entre les noeuds O1 et O2.

Selon un mode de réalisation, les transistors MOS T1, T2, T3, et T4 sont identiques.

Dans un premier mode de fonctionnement, le circuit d'atténuation ATT est commandé pour que le signal RXout soit sensiblement égal au signal RXin. Dans un deuxième mode de fonctionnement, le circuit d'atténuation ATT est commandé pour que le signal RXout soit sensiblement nul indépendamment du signal RXin.

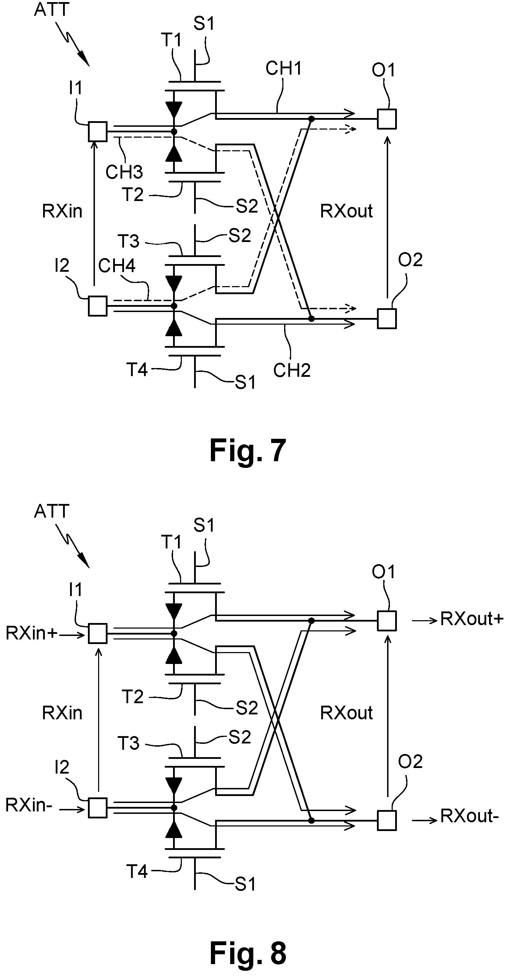

La figure 7 représente le circuit d'atténuation ATT dans le premier mode de fonctionnement et illustre les chemins de circulation de courant. Les signaux S1 et S2 sont fournis pour que les transistors T1 et T4 soient à l'état passant et pour que les transistors T2 et T3 soient à l'état bloqué. Dans le cas où les transistors T1, T2, T3, T4 sont des transistors MOS à canal N, dans le premier mode de fonctionnement, le signal S1 est à un état haut et le signal S2 est à un état bas. Du courant peut circuler du noeud I1 vers le noeud O1 (chemin CH1) et du noeud I2 vers le noeud O2 (chemin CH2). En raison des capacités parasites des transistors T2 et T3, un courant très faible peut circuler du noeud I1 vers le noeud O2 (chemin CH3) et du noeud I2 vers le noeud O1 (chemin CH4). Le potentiel RXout+ est sensiblement égal au potentiel RXin+ et le potentiel RXout- est sensiblement égal au potentiel RXin- avec une faible atténuation due à la résistance parasites des transistors T1 et T4. La tension RXout est alors sensiblement égale à la tension RXin avec une faible atténuation. Le circuit d'atténuation ATT se comporte alors comme un interrupteur fermé ayant une faible atténuation.

La figure 8 représente le circuit d'atténuation ATT dans le deuxième mode de fonctionnement et illustre les chemins de circulation de courant. Les signaux S1 et S2 sont fournis pour que les transistors T1, T2, T3, T4 soient à l'état passant. Dans le cas où les transistors T1, T2, T3, T4 sont des transistors MOS à canal N, dans le deuxième mode de fonctionnement, les signaux S1 et S2 sont à l'état haut. Du courant peut circuler du noeud I1 vers le noeud O1 (chemin CH1), du noeud I2 vers le noeud O2 (chemin CH3), du noeud I1 vers le noeud O2 (chemin CH3), et du noeud I2 vers le noeud O1 (chemin CH4).

Le potentiel RXin+ présent au noeud I1 est sensiblement en opposition de phase avec le signal RXin-présent au noeud I2. Tout se passe comme si une sommation des potentiels RXin+ et RXin- est réalisée au noeud O1 de sorte que le potentiel RXout+ est sensiblement nul et une sommation des potentiels RXin+ et RXin- est réalisée au noeud O2 de sorte que le potentiel RXout- est sensiblement nul. La tension RXout est donc sensiblement nulle. Le circuit d'atténuation se comporte alors comme un interrupteur ouvert. Une forte atténuation du signal RXin est donc obtenue dans le deuxième mode de fonctionnement. De préférence, une atténuation du signal RXin supérieure à 30 dB est obtenue dans le deuxième mode de fonctionnement. Ceci permet de façon avantageuse de bloquer des impulsions dues à des phénomènes de couplage et de protéger l'amplificateur à faible bruit 35 contre ces impulsions.

Les transistors T1 et T4 sont donc à l'état passant dans le premier mode de fonctionnement et dans le deuxième mode de fonctionnement. Le signal S1 peut donc être constant. Les transistors T2 et T3 sont à l'état bloqué dans le premier mode de fonctionnement et à l'état passant dans le deuxième mode de fonctionnement.

Selon un mode de réalisation, le circuit d'atténuation ATT peut être commandé en outre dans un troisième mode de fonctionnement où tous les transistors T1, T2, T3, et T4 sont à l'état bloqué.

La durée pour commander le passage du circuit d'atténuation ATT du premier mode de fonctionnement au deuxième mode de fonctionnement est inférieure à 1 ns, de préférence inférieure à 200 ps, par exemple comprise entre 10 ps et 200 ps. De façon avantageuse, la commutation du circuit d'atténuation ATT entre les premier et deuxième modes de fonctionnement peut être réalisée rapidement.

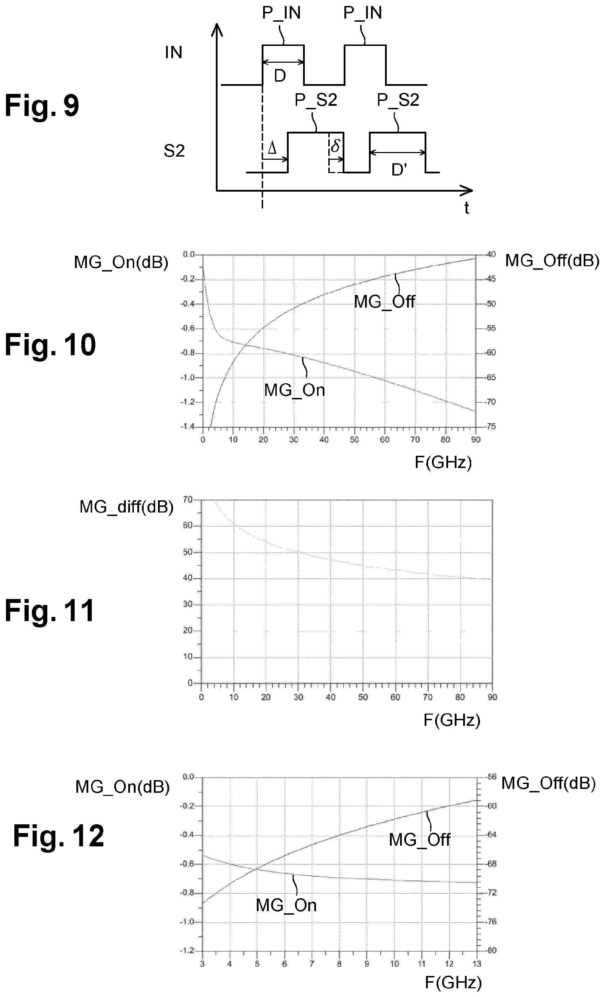

La figure 9 représente des chronogrammes du signal IN et du signal S2 de commande des transistors T2 et T3 du circuit d'atténuation ATT. Le signal IN comprend des impulsions P_IN pour chaque émission d'une impulsion d'ondes électromagnétiques et le signal S2 comprend une impulsion P_S2 pour chaque impulsion du signal P_IN. Selon un mode de réalisation, les impulsions P_IN ont une durée D et les impulsions P_S2 ont une durée D'. Les impulsions P_S2 sont caractérisées par deux paramètres Δ et δ. Le paramètre Δ correspond à la durée entre le front montant de l'impulsion P_IN et le front montant de l'impulsion P_S2 correspondante. Le paramètre δ correspond à la différence entre les durées D' et D, la durée D' étant supérieure à la durée D. Les durées D, D', Δ et δ dépendent des applications envisagées, et notamment de la bande de fréquence radio utilisée. Selon un mode de réalisation, la durée D est comprise entre 200 ps et 1 µs. Selon un mode de réalisation, la durée D' est comprise entre D et 10 fois D. Selon un mode de réalisation, la durée Δ est comprise entre 0 et D. Selon un mode de réalisation, la durée δ est comprise entre 0 et 9 fois D.

Des simulations ont été réalisées. Les simulations incluent les variations inévitables lors de la conception de circuit intégré.

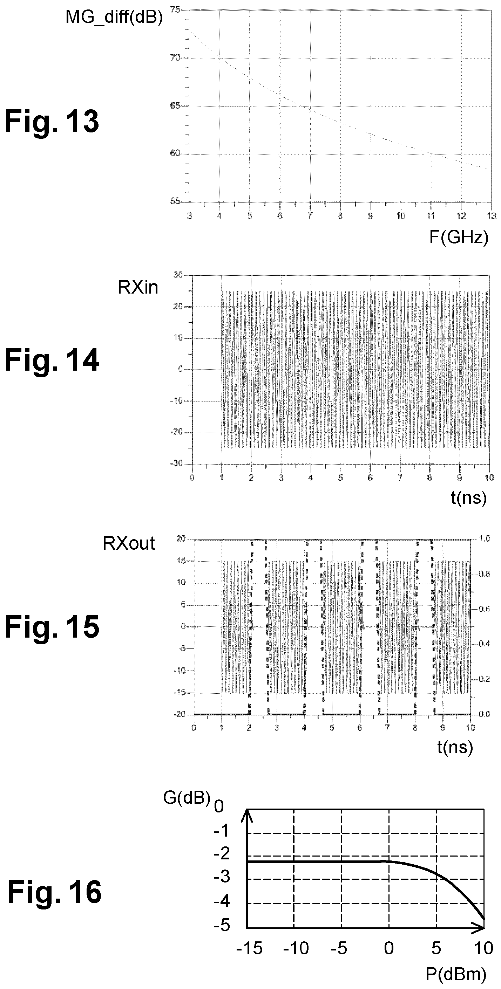

La figure 10 est une courbe d'évolution MG_On du gain maximal de transmission du circuit d'atténuation ATT en fonction de la fréquence F du signal RXin dans le premier mode de fonctionnement et une courbe d'évolution MG_Off du gain maximal de transmission du circuit d'atténuation ATT en fonction de la fréquence F du signal RXin dans le deuxième mode de fonctionnement. La figure 11 est une courbe d'évolution MG_diff de la différence entre les courbes d'évolution MG_On et MG_Off. La figure 12 est un agrandissement de la figure 10 et la figure 13 est un agrandissement de la figure 11 pour les fréquences variant de 3 GHz à 11 GHz qui correspondent à la majorité des applications en ultra large bande. Une atténuation du signal RXin supérieure à 40 dB est obtenue dans le deuxième mode de fonctionnement.

La figure 14 est un chronogramme du signal RXin fourni au circuit d'atténuation de la figure 6 et la figure 15 est une courbe d'évolution du signal RXout obtenu dans le cas où le signal RXin est un signal sinusoïdal de fréquence égale à 8 GHz injecté à l'instant t égal à 1 ns. Le signal RXin est transmis avec peu d'atténuation (on passe d'une amplitude de 25 mV pour le signal RXin à environ 15 mV pour le signal RXout), bien que dans la présente simulation il n'y a pas eu d'adaptation d'impédance et que des impédances par défaut de 50 ohms ont été utilisées. A l'instant t égal à 2 ns, le circuit d'atténuation est activé pendant une durée nettement inférieur à 1 ns. Une atténuation très rapide et très importante peut être observée pour le signal RXout.

La figure 16 est une courbe d'évolution du gain G de transmission du circuit d'atténuation ATT en fonction de la puissance P du signal RXin lorsque la fréquence du signal RXin est égale à 83,3 GHz. Une diminution du gain G est visible lorsque la puissance P est supérieure à 0 dBm.

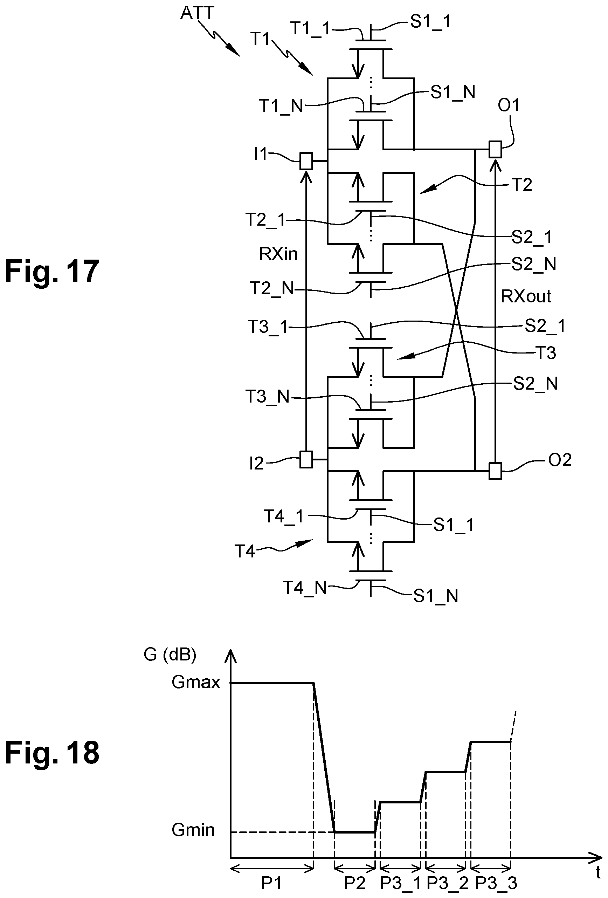

La figure 17 est un schéma électrique d'un autre mode de réalisation du circuit d'atténuation ATT. Le circuit d'atténuation ATT représenté en figure 17 a la même structure que le circuit d'atténuation ATT représenté en figure 6 à la différence que le transistor T1 est composé de N transistors MOS T1_1 à T1_N, par exemple à canal N, montés en parallèle, que le transistor T2 est composé de N transistors MOS T2_1 à T2_N, par exemple à canal N, montés en parallèle, que le transistor T3 est composé de N transistors MOS T3_1 à T3_N, par exemple à canal N, montés en parallèle, et que le transistor T4 est composé de N transistors MOS T4_1 à T4_N, par exemple à canal N, montés en parallèle. Plus précisément, pour chaque transistor MOS T1_i, i variant de 1 à N, le drain du transistor T1_i est relié, de préférence connecté au noeud O1, et la source du transistor T1_i est reliée, de préférence connectée, au noeud I1. Pour chaque transistor MOS T2_i, i variant de 1 à N, le drain du transistor T2_i est relié, de préférence connecté au noeud O2, et la source du transistor T2_i est reliée, de préférence connectée, au noeud I1. Pour chaque transistor MOS T3_i, i variant de 1 à N, le drain du transistor T3_i est relié, de préférence connecté au noeud O1, et la source du transistor T3_i est reliée, de préférence connectée, au noeud I2. Pour chaque quatrième transistor MOS T4_i, i variant de 1 à N, le drain du transistor T4_i est relié, de préférence connecté au noeud O2, et la source du transistor T4_i est reliée, de préférence connectée, au noeud I2. La grille de chaque transistor T1_i, i variant de 1 à N, reçoit un signal de commande de grille S1_i. La grille de chaque transistor T2_i, i variant de 1 à N, reçoit un signal de commande de grille S2_i. La grille de chaque transistor T3_i, i variant de 1 à N, reçoit un signal de commande de grille S2_i. La grille de chaque transistor T4_i, i variant de 1 à N, reçoit un signal de commande de grille S1_i.

Selon un mode de réalisation, le procédé de commande du circuit d'atténuation ATT représenté en figure 17 peut être identique à ce qui a été décrit précédemment pour le circuit d'atténuation ATT représenté en figure 6. Dans ce cas, les signaux S1_1 à S1_N sont identiques, et les signaux S2_1 à S2_N sont identiques.

La figure 18 représente une courbe d'évolution du gain G de transmission du circuit d'atténuation ATT de la figure 17 illustrant un autre mode de réalisation dans lequel, dans un troisième mode de fonctionnement, les signaux S2_1 à S2_N ne sont pas tout le temps identiques.

En figure 18, on a représenté une phase P1, une phase P2, et des phases P3_1, P3_2, P3_3. La phase P1 correspond au premier mode de fonctionnement décrit précédemment dans lequel les transistors T1_1 à T1_N et les transistors T4_1 à T4_N sont à l'état passant tandis que les transistors T2_1 à T2_N et les transistors T3_1 à T3_N sont à l'état bloqué. Le gain G est à une valeur maximale Gmax. En figure 18, la phase P2 correspond au deuxième mode de fonctionnement décrit précédemment dans lequel les transistors T1_1 à T1_N, les transistors T2_1 à T2_N, les transistors T3_1 à T3_N et les transistors T4_1 à T4_N sont à l'état passant. Le gain G est à une valeur minimale Gmin. Dans les phases P3_1, P3_2, P3_3, le gain G est entre les valeurs Gmin et Gmax. Dans ces phases P3_1, P3_2, P3_3, les transistors T1_1 à T1_N et les transistors T4_1 à T4_N sont à l'état passant. En outre, un nombre K des transistors T2_1 à T2_N sont à l'état passant, K variant de entre 1 à N-1, le reste des transistors T2_1 à T2_N étant à l'état bloqué, et le nombre K des transistors T3_1 à T3_N sont à l'état passant et le reste des transistors T3_1 à T3_N étant à l'état bloqué. Le gain G varie en fonction du nombre K. Plus le nombre K est élevé, plus le G est proche de Gmin. Plus le nombre K est faible, plus le G est proche de Gmax. Le nombre K peut être différent d'une phase P3_1, P3_2, P3_3 à l'autre.

Un tel mode de réalisation permet de réaliser une atténuation modérée sur le signal RXin, sans toutefois bloquer complètement le signal RXin. Ceci est avantageux notamment pour protéger l'amplificateur à faible bruit 35 dans le cas où le signal RXin correspond à l'écho d'une cible proche du radar 50 et peut avoir une puissance élevée. Cela permet notamment d'utiliser un amplificateur à faible bruit 35 très sensible, adapté à la détection de cibles lointaines, également pour la détection de cibles proches.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, dans les modes de réalisation décrits précédemment, le circuit d'atténuation ATT comprend des transistors MOS T1, T2, T3, T4. Toutefois, chaque transistor MOS peut être remplacé par un autre type de transistor, notamment un transistor bipolaire ou un transistor à effet de champ à dopage modulé, également appelé MODFET (acronyme anglais pour modulated-doping field effect transistor) ou HEMT (acronyme anglais pour High Electron Mobility Transistor).

Enfin, la mise en oeuvre pratique des modes de réalisation et variantes décrits est à la portée de la personne du métier à partir des indications fonctionnelles données ci-dessus.

## Revendications

1. Radar (50) comprenant un récepteur (30) d'ondes électromagnétiques comprenant une antenne de réception (32) des ondes électromagnétiques reliée à un circuit intégré comprenant un amplificateur différentiel à faible bruit (35) et un circuit d'atténuation (ATT) interposé entre l'antenne de réception (32) et l'amplificateur différentiel à faible bruit (35), le circuit d'atténuation (ATT) comprenant au moins des premier, deuxième, troisième, et quatrième transistors (T1, T2, T3, T4).

2. Radar selon la revendication 1, dans lequel les premier, deuxième, troisième, et quatrième transistors (T1, T2, T3, T4) sont des transistors à effet de champ à grille isolée.

3. Radar selon la revendication 1 ou 2, comprenant une première ligne symétrique (LI) entre l'antenne de réception (32) et le circuit d'atténuation (ATT) et une deuxième ligne symétrique (LO) entre le circuit d'atténuation (ATT) et l'amplificateur différentiel à faible bruit (35).

4. Radar selon la revendication 3, dans lequel le circuit d'atténuation (ATT) comprend :
- un premier noeud (I1) connecté à une première piste conductrice de la première ligne symétrique (LI) ;
- un deuxième noeud (I2) connecté à une deuxième piste conductrice de la première ligne symétrique (LI) ;
- un troisième noeud (O1) connecté à une première piste conductrice de la deuxième ligne symétrique (LO) ;
- un quatrième noeud (O2) connecté à une deuxième piste conductrice de la deuxième ligne symétrique (LO) ;
- le premier transistor (T1), dont l'un du drain et de la source est relié au premier noeud (I1) et dont l'autre du drain et de la source est relié au troisième noeud (O1), et dont la grille reçoit un premier signal binaire (S1) ;
- le deuxième transistor (T2), dont l'un du drain et de la source est relié au premier noeud (I1) et dont l'autre du drain et de la source est relié au quatrième noeud (O2), et dont la grille reçoit un deuxième signal binaire (S2) ;
- le troisième transistor (T3), dont l'un du drain et de la source est relié au deuxième noeud (I2) et dont l'autre du drain et de la source est relié au troisième noeud (O1), et dont la grille reçoit le deuxième signal binaire (S2) ; et
- le quatrième transistor (T4), dont l'un du drain et de la source est relié au deuxième noeud (I2) et dont l'autre du drain et de la source est relié au troisième noeud (O1), et dont la grille reçoit le premier signal binaire (S1).

5. Radar selon la revendication 3 ou 4, comprenant en outre un balun (33) interposé entre l'antenne de réception (32) et le circuit d'atténuation (ATT) et connecté à la première ligne symétrique (LI).

6. Radar selon l'une quelconque des revendications 1 à 5, comprenant en outre un émetteur (20) des ondes électromagnétiques comprenant une antenne d'émission (22) des ondes électromagnétiques, confondue ou distincte de l'antenne de réception (32), et reliée à un circuit de commande (24) configuré pour commander l'antenne d'émission, le circuit de commande (24) étant en outre configuré pour commander le circuit d'atténuation (ATT).

7. Radar selon la revendication 6, dans lequel, dans un premier mode de fonctionnement, le circuit de commande (24) est configuré pour commander la mise à l'état passant des premier et quatrième transistors (T1, T4) et la mise à l'état bloqué des deuxième et troisième transistors (T2, T3), et dans lequel, dans un deuxième mode de fonctionnement, le circuit de commande (24) est configuré pour commander la mise à l'état passant des premier, deuxième, troisième, et quatrième transistors (T1, T2, T3, T4).

8. Radar selon l'une quelconque des revendications 1 à 7, dans lequel chacun des premier, deuxième troisième, et quatrième transistors (T1, T2, T3, T4) comprend N transistors MOS en parallèle, où N est un nombre entier supérieur ou égal à 2.

9. Procédé de fonctionnement du radar (50) selon l'une quelconque des revendications 1 à 8, comprenant, dans un premier mode de fonctionnement, la mise à l'état passant des premier et quatrième transistors (T1, T4) et la mise à l'état bloqué des deuxième et troisième transistors (T2, T3), et, dans un deuxième mode de fonctionnement, la mise à l'état passant des premier, deuxième, troisième, et quatrième transistors (T1, T2, T3, T4).

10. Procédé selon la revendication 9, le radar (50) étant selon la revendication 6, comprenant le passage du premier mode de fonctionnement au deuxième mode de fonctionnement, et le maintien du deuxième mode de fonctionnement pendant une durée (D') déterminée, à la commande par le circuit de commande (24), de l'émission d'une impulsion des ondes électromagnétiques, et le passage du deuxième mode de fonctionnement au premier mode de fonctionnement à l'achèvement de la durée (D') déterminée.

11. Procédé selon la revendication 9, le radar (50) étant selon la revendication 8, comprenant, dans le premier mode de fonctionnement, la mise à l'état passant des N transistors MOS des premier et quatrième transistors (T1, T4) et la mise à l'état bloqué des N transistors MOS des deuxième et troisième transistors (T2, T3), dans le deuxième mode de fonctionnement, la mise à l'état passant des N transistors MOS des premier, deuxième, troisième, et quatrième transistors (T1, T2, T3, T4), et comprenant, dans un troisième mode de fonctionnement, la mise à l'état passant des N transistors MOS des premier et quatrième transistors (T1, T4), la mise à l'état passant d'une partie des N transistors MOS des deuxième et troisième transistors (T2, T3) et la mise à l'état bloqué du reste des N transistors MOS des deuxième et troisième transistors (T2, T3).
